(19) Europäisches Patentamt
European Patent Office
Office européen des brevets

(11) EP 4 783 257 A1

(12) **EUROPEAN PATENT APPLICATION**
published in accordance with Art. 153(4) EPC

(43) Date of publication:
29.07.2026 Bulletin 2026/31

(51) International Patent Classification (IPC):
H01M 4/36 (2006.01)    H01M 4/525 (2010.01)
H01M 4/505 (2010.01)    H01M 4/131 (2010.01)
H01M 10/052 (2010.01)   H01M 4/02 (2006.01)

(21) Application number: 24868588.5

(52) Cooperative Patent Classification (CPC):
H01M 4/02; H01M 4/131; H01M 4/36; H01M 4/505;
H01M 4/525; H01M 10/052; Y02E 60/10

(22) Date of filing: 11.09.2024

(86) International application number:
PCT/KR2024/013840

(87) International publication number:
WO 2025/063610 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.09.2023 KR 20230127434

(71) Applicant: Posco Future M Co., Ltd.
Pohang-si, Gyeongsangbuk-do 37918 (KR)

(72) Inventors:
• LEE, Seungwon
Pohang-si, Gyeongsangbuk-do 37918 (KR)
• MYUNG, Minhoon
Pohang-si, Gyeongsangbuk-do 37918 (KR)
• LEE, Subin
Pohang-si, Gyeongsangbuk-do 37918 (KR)

(74) Representative: Pfenning, Meinig & Partner mbB
Patent- und Rechtsanwälte
Theresienhöhe 11a
80339 München (DE)

(54) **CATHODE ACTIVE MATERIAL FOR LITHIUM SECONDARY BATTERY AND LITHIUM SECONDARY BATTERY COMPRISING SAME**

(57)    The present embodiments relate to a positive electrode active material for a lithium secondary battery and a lithium secondary battery including the same. In one embodiment, the positive electrode active material for a lithium secondary battery comprises:
a single-particle metal oxide comprising 0.8 mol or more of nickel based on 1 mol of total metals excluding lithium; and a coating layer located on a surface of the metal oxide and comprising cobalt; wherein the metal oxide having the coating layer formed thereon may have a particle diameter (Dn10), corresponding to 10% in a cumulative particle-number distribution, of 1.1 $\mu$m or greater.

【Fig. 1】

EP 4 783 257 A1

**Description**

[Technical Field]

The present embodiments relate to a positive electrode active material for a lithium secondary battery and to a lithium secondary battery including the same.

[Background Art]

With the recent explosive increase in demand for electric vehicles and the accompanying need for extended driving ranges, the development of secondary batteries having high capacity and high energy density has been actively pursued worldwide.

As an approach to satisfy such needs, technologies employing high-nickel NCM positive electrode materials, which have a high nickel content and are configured in the form of secondary particles, have been proposed.

However, as the nickel content increases, particle strength decreases, resulting in the generation of microcracks during charge and discharge. Consequently, the specific surface area of the positive electrode material increases, leading to increased reactions with the electrolyte and thereby increased gas generation.

In addition, due to the weak mechanical strength of the secondary particles, the particles may fracture during the electrode roll-pressing process, which increases the amount of fine powder generated and thus degrades the lifetime characteristics of the battery.

To address these issues, an approach has been proposed in which the size of primary particles is maximized and a single-particle-type positive electrode material is produced, thereby reducing the specific surface area and increasing particle strength.

However, in general, to manufacture a single-particle-type positive electrode material, calcination must be carried out at a higher temperature than that used for secondary-particle-type materials, and under such conditions, over-sintering commonly occurs, leading to structural defects in the layered crystal structure, which in turn degrades output and lifetime characteristics.

[Detailed Description of the Invention]

[Technical Problem]

The present embodiments are directed to providing a positive electrode active material for a lithium secondary battery, and a lithium secondary battery including the same, which exhibit excellent output characteristics and lifetime performance.

[Technical Solution]

In one embodiment, the positive electrode active material for a lithium secondary battery comprises: a single-particle metal oxide comprising 0.8 mol or more of nickel based on 1 mol of total metals excluding lithium; and a coating layer located on a surface of the metal oxide and comprising cobalt; wherein the metal oxide having the coating layer formed thereon may have a particle diameter (Dn10) corresponding to 10% in a cumulative particle-number distribution of 1.1 $\mu$m or greater.

In another embodiment, a positive electrode for a lithium secondary battery may include the positive electrode active material according to the one embodiment.

In yet another embodiment, a lithium secondary battery may include the positive electrode according to the one embodiment.

[Effects of the Invention]

According to the present embodiments, by controlling the degree of fines based on the cumulative particle-number distribution of the single-particle metal oxide to a predetermined level or higher, the high-temperature lifetime performance of the battery can be remarkably improved. More specifically, when the particle diameter (Dn10), corresponding to 10% in the cumulative particle-number distribution of the single-particle metal oxide having the coating layer formed thereon, is 1.1 $\mu$m or greater, excellent high-temperature lifetime characteristics and resistance characteristics of the lithium secondary battery can be secured.

[Brief Description of the Drawings]

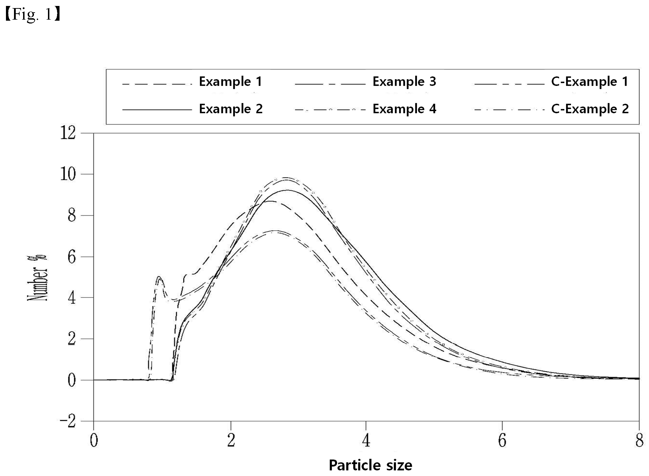

FIG. 1 illustrates the particle-size distribution based on the cumulative particle-number distribution for the positive electrode active materials prepared in Examples 1 to 4 and Comparative Examples 1 and 2.

[Best Mode for Carrying Out the Invention]

The terms such as "first," "second," and "third," and the like are used to describe various portions, components, regions, layers, and/or sections, but are not limited thereto. These terms are used only to distinguish one portion, component, region, layer, or section from another portion, component, region, layer, or section. Thus, a "first" portion, component, region, layer, or section described below may be referred to as a "second" portion, component, region, layer, or section within the scope of the present invention.

The technical terminology used herein is intended merely to describe specific embodiments and is not intended to limit the present invention. The singular forms used herein include the plural forms as well unless the context clearly indicates otherwise. The term "comprising/including/containing" as used in the specification, specifies the presence of stated features, regions, integers, steps, operations, elements, and/or components, but does not preclude the presence or addition of one or more other features, regions, integers, steps, operations, elements, and/or components.

When a component is referred to as being "on" or "over/above" another component, it may be directly on or over the other component, or intervening components may be present. In contrast, when a component is referred to as being "directly on" or "directly over/above" another component, there are no intervening components.

Unless otherwise defined, all terms used herein, including technical and scientific terms, have the same meanings as commonly understood by one of ordinary skill in the art to which the present invention pertains. Terms defined in generally used dictionaries shall be interpreted as having meanings consistent with their use in the relevant technical literature and the present disclosure, and unless defined otherwise, shall not be interpreted in an idealized or overly formal sense.

Unless specifically stated otherwise, "%" means weight percent (wt%), and 1 ppm means 0.0001 wt%.

As used herein in a Markush-type expression, the term "combinations thereof" refers to any mixture or combination of one or more elements selected from the group described in the Markush expression, and includes any one or more selected from the group.

Hereinafter, embodiments of the present invention will be described in detail to enable those skilled in the art to readily carry out the invention. However, the present invention may be embodied in various different forms and is not limited to the embodiments described herein.

## Positive Electrode Active Material for a Lithium Secondary Battery

As described above, a single-particle-type positive electrode active material tends to suffer from over-sintering during high-temperature calcination, which may cause defects in the layered crystal structure, resulting in reduced output characteristics and degraded high-temperature lifetime characteristics.

However, in the present embodiments, such issues were addressed by controlling the particle diameter (Dn10), corresponding to 10% in the cumulative particle-number distribution of the single-particle metal oxide having the coating layer formed thereon, to be 1.1 $\mu$m or greater.

Specifically, in one embodiment, the positive electrode active material for a lithium secondary battery comprises: a single-particle metal oxide comprising 0.8 mol or more of nickel based on 1 mol of total metals excluding lithium; and a coating layer located on a surface of the metal oxide and comprising cobalt; wherein the metal oxide having the coating layer formed thereon may have a particle diameter (Dn10), corresponding to 10% in the cumulative particle-number distribution, of 1.1 $\mu$m or greater.

In the present specification, the term *single particle* may include at least one structure selected from: (a) a single-crystal structure formed as one particle; and (b) a structure in which approximately 2 to 20, or 2 to 10, particles are agglomerated together but appear as one distinguishable mass when the cross-section of a powder is observed through scanning electron microscopy (SEM). Here, *one particle* refers to one crystallite (grain or crystallite).

As in the present embodiments, a single-particle-type active material has a smaller specific surface area compared to a conventional secondary-particle-type active material in which several tens to several hundreds of primary particles are aggregated. Accordingly, side reactions with the electrolyte are reduced, thereby reducing gas generation. Further, the particle strength is higher, suppressing particle fracture during roll-pressing, and crack formation during repeated charge/discharge cycling is reduced. Therefore, compared to secondary particles, the single-particle-type active material has advantages in terms of lifetime and safety, and enables the realization of high-energy-density electrodes.

However, in general, single-particle-type active materials may exhibit decreased capacity and degraded high-temperature lifetime characteristics due to increased lithium-ion diffusion distances caused by enlarged crystallite size.

In the present invention, by controlling the fines content such that the particle diameter (Dn10), corresponding to 10% in the cumulative particle-number distribution of the metal oxide having the coating layer formed thereon, is 1.1 $\mu$m or greater, and more specifically 1.1 $\mu$m to 2.0 $\mu$m, a positive electrode active material with excellent high-temperature lifetime characteristics can be achieved.

In the present embodiments, the metal oxide having the coating layer formed thereon may satisfy the following Formula 1:

[Formula 1]

$$1.1 \leq Dv10 / Dn10 \leq 2.2$$

The metal oxide having the coating layer formed thereon may also satisfy the following Formula 2:

[Formula 2]

$$0.5\mu m \leq Dv10 - Dn10 \leq 1.2\mu m$$

In Formulas 1 and 2,
*Dv10* is the average particle diameter corresponding to 10% in a volume-based cumulative particle-size distribution of the metal oxide having the coating layer formed thereon, and *Dn10* is the average particle diameter at the point corresponding to 10% in the cumulative particle-number distribution obtained by accumulating particles from the smallest diameter.

The volume-based average particle diameter (Dv10) and the number-based average particle diameter (Dn10) may be measured, for example, using a laser diffraction method.

Next, the metal oxide having the coating layer formed thereon may have a particle diameter ($Dn_{min}$) corresponding to the minimum value in the cumulative particle-number distribution of 1.0 $\mu$m or greater, and more specifically 1.0 $\mu$m to 1.4 $\mu$m.

By controlling the fines content such that the particle diameter ($Dn_{min}$), and Formula 1 and/or Formula 2 are satisfied, the high-temperature lifetime characteristics of the lithium secondary battery can be dramatically improved.

In addition, the metal oxide having the coating layer formed thereon may have an average particle diameter (Dv50) of 5 $\mu$m or less, and more specifically 2 $\mu$m to 5 $\mu$m.

Meanwhile, the single-particle metal oxide may comprise 0.8 mol or more of nickel based on 1 mol of total metals excluding lithium.

The nickel content may be 0.8 mol or more, more specifically 0.8 mol to 0.99 mol, 0.82 mol to 0.95 mol, or 0.82 mol to 0.93 mol, based on 1 mol of total metals excluding lithium. When the nickel content satisfies the above ranges, a high-capacity battery can be achieved.

As described earlier, single-particle-type positive electrode active materials are typically manufactured through high-temperature calcination compared to secondary-particle-type materials, and thus defects in the layered structure may occur.

In the present embodiments, by forming the cobalt-containing coating layer on the surface of the metal oxide, structural defects such as an increase in cation-mixing ratio caused by high-temperature calcination can be prevented, and the crystallite size inside the single particle and the average particle diameter of the single particle can be efficiently increased during calcination.

The amount of cobalt contained in the coating layer may be 0.035 mol to 0.08 mol, and more specifically 0.05 mol to 0.07 mol, based on 1 mol of total metals excluding lithium in the single-particle metal oxide.

When the cobalt content in the coating layer satisfies the above ranges, the crystallites can be grown to an appropriate size, while the manufacturing cost can be effectively controlled, thereby providing excellent economic feasibility.

Next, the coating layer may further comprise aluminum.

When aluminum is included together with cobalt in the coating layer, output characteristics can be further improved.

Meanwhile, in the positive electrode active material of the present embodiments, the metal oxide may further comprise cobalt and manganese.

The cobalt content in the metal oxide may be 0.05 mol or less, more specifically greater than 0 mol and 0.05 mol or less, based on 1 mol of total metals excluding lithium.

The manganese content may be 0.1 mol or less, more specifically 0.05 mol to 0.1 mol, based on 1 mol of total metals excluding lithium.

The metal oxide may further comprise a doping element.

The doping element may include, for example, at least one selected from Y, Al, Zr, Nb, Mo, W, Ti, Ce, Mg, B, P, V, and Sr. In the present embodiments, the doping element may include, for example, Y, Al, and Zr.

The content of the doping element may be 0 to 0.2 mol, and more specifically 0.0005 mol to 0.1 mol, 0.0005 mol to 0.08 mol, 0.0005 mol to 0.04 mol, or 0.001 mol to 0.03 mol, based on 1 mol of total metals excluding lithium. Specifically, based on 1 mol of total metals excluding lithium, the Y content may be 400 ppm to 2,000 ppm, the Al content may be 200 ppm to 1,800 ppm, and the Zr content may be 1,200 ppm to 2,800 ppm.

In the present embodiments, the content of the doping element refers to the doping amount of the doping element included in the finally obtained positive electrode active material.

## Positive Electrode

In another embodiment, a positive electrode is provided, the positive electrode comprising: a current collector; and a positive electrode active material layer located on one surface of the current collector, the positive electrode active material layer comprising the positive electrode active material prepared in accordance with the previously described embodiment.

The characteristics of the positive electrode active material constituting the positive electrode active material layer are the same as those described above, and thus a detailed description thereof will be omitted.

The current collector may include, for example, stainless steel, aluminum, nickel, titanium, calcined carbon, or aluminum or stainless steel whose surface is coated with carbon, nickel, titanium, silver, or the like.

The positive electrode active material layer may further comprise a binder and a conductive agent.

The binder enhances adhesion between the particles of the positive electrode active material and improves adhesion between the positive electrode active material and the current collector. Illustrative examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof. Any one of these binders alone or a mixture of two or more thereof may be used, without limitation. The binder may be included in an amount of 1 wt% to 30 wt% based on the total weight of the positive electrode active material layer.

The conductive agent is used to impart electrical conductivity to the electrode and may be any electron-conductive material that does not cause chemical changes within the battery. Examples include graphite such as natural graphite or artificial graphite; carbon-based materials such as carbon black, acetylene black, Ketjen black, channel black, furnace black, lamp black, thermal black, or carbon fibers; metal powders or metal fibers such as copper, nickel, aluminum, or silver; conductive whiskers such as zinc oxide or potassium titanate; conductive metal oxides such as titanium oxide; or conductive polymers such as polyphenylene derivatives. Any one of these materials alone or a mixture of two or more thereof may be used without limitation. The conductive agent may be included in an amount of 1 wt% to 30 wt% based on the total weight of the positive electrode active material layer.

Except for using the above-described positive electrode active material, the positive electrode may be manufactured according to conventional methods.

Specifically, the positive electrode may be fabricated by applying a composition for forming the positive electrode active material layer-including the positive electrode active material and, as necessary, a binder, conductive agent, or solvent-onto the current collector, followed by drying and roll-pressing. The types and contents of the positive electrode active material, binder, and conductive agent are as described above.

The solvent may be any solvent generally used in the art, such as dimethyl sulfoxide (DMSO), isopropyl alcohol, N-methyl-2-pyrrolidone (NMP), acetone, or water, alone or in combination of two or more.

The amount of the solvent may be such that the positive electrode active material, conductive agent, and binder are sufficiently dissolved or dispersed, and that the resulting slurry exhibits a viscosity suitable for achieving excellent coating uniformity during electrode fabrication, considering the coating thickness and production yield.

In another method, the positive electrode may be prepared by casting the composition for forming the positive electrode active material layer onto a separate support to form a film, peeling the film from the support, and laminating the film onto the current collector.

## Lithium Secondary Battery

In another embodiment, a lithium secondary battery is provided, the lithium secondary battery comprising the positive electrode described above.

The lithium secondary battery may specifically include a positive electrode, a negative electrode disposed to face the positive electrode, a separator interposed between the positive electrode and the negative electrode, and an electrolyte, wherein the positive electrode is as previously described. In addition, the lithium secondary battery may further include a battery case that houses an electrode assembly comprising the positive electrode, the negative electrode, and the separator, and a sealing member for sealing the battery case.

In the lithium secondary battery, the negative electrode may include a negative electrode current collector and a negative electrode active material layer located on the negative electrode current collector.

The negative electrode current collector is not particularly limited so long as it has high electrical conductivity without causing chemical changes in the battery. For example, copper, stainless steel, aluminum, nickel, titanium, calcined carbon, copper or stainless steel whose surface is treated with carbon, nickel, titanium, or silver, or an aluminum-cadmium alloy may be used. The negative electrode current collector may typically have a thickness of 3 to 500 $\mu$m, and like the positive electrode current collector, the surface of the current collector may be provided with fine surface roughness to enhance adhesion with the negative electrode active material. Examples include films, sheets, foils, nets, porous bodies, foams, nonwoven fabrics, and the like.

The negative electrode active material layer may optionally include a binder and a conductive agent in addition to the negative electrode active material.

For example, the negative electrode active material layer may be formed by applying onto the negative electrode current collector a composition comprising the negative electrode active material and, optionally, a binder and a conductive agent, followed by drying; or by casting the composition for forming the negative electrode active material layer onto a separate support, peeling off the resulting film, and laminating the film onto the negative electrode current collector.

The negative electrode active material may be a compound capable of reversibly intercalating and deintercalating lithium. Specific examples include carbonaceous materials such as artificial graphite, natural graphite, graphitized carbon fibers, and amorphous carbon; metal-based compounds capable of alloying with lithium such as Si, Al, Sn, Pb, Zn, Bi, In, Mg, Ga, Cd, Si alloys, Sn alloys, or Al alloys; metal oxides capable of doping and dedoping lithium such as $SiO\beta$ ($0 < \beta < 2$), $SnO_2$, vanadium oxides, or lithium vanadium oxides; or composites containing the above metal-based compounds and carbonaceous materials, such as Si-C composites or Sn-C composites. Either one or a mixture of two or more thereof may be used. In addition, a thin film of metallic lithium may be used as the negative electrode active material.

Carbon materials may include both low-crystalline carbon and highly crystalline carbon. Representative examples of low-crystalline carbon include soft carbon and hard carbon, and representative examples of highly crystalline carbon include amorphous, plate-shaped, flake-type, spherical, or fibrous natural graphite or artificial graphite, Kish graphite, pyrolytic carbon, mesophase pitch-based carbon fibers, mesocarbon microbeads, mesophase pitches, and petroleum- or coal-tar pitch-derived cokes subjected to high-temperature calcination.

The binder and the conductive agent may be the same as those described above for the positive electrode.

Depending on the type of the lithium secondary battery, a separator may be present between the positive electrode and the negative electrode. Such separators may include polyethylene, polypropylene, polyvinylidene fluoride, or multilayer films comprising two or more of these. Examples include polyethylene/polypropylene two-layer separators, polyethylene/polypropylene/polyethylene three-layer separators, polypropylene/polyethylene/polypropylene three-layer separators, and other mixed multilayer membranes.

In addition, in the lithium secondary battery, the electrolyte may include an organic liquid electrolyte, an inorganic liquid electrolyte, a solid polymer electrolyte, a gel polymer electrolyte, an inorganic solid electrolyte, or a molten inorganic electrolyte that can be used in the manufacture of lithium secondary batteries, without limitation.

Specifically, the organic liquid electrolyte may include an organic solvent and a lithium salt.

The organic solvent may be any medium capable of transporting ions involved in the electrochemical reactions of the battery. Specific examples of the organic solvent include ester-based solvents such as methyl acetate and ethyl acetate, $\gamma$-butyrolactone, and $\varepsilon$-caprolactone; ether-based solvents such as dibutyl ether and tetrahydrofuran; ketone-based solvents such as cyclohexanone; aromatic hydrocarbon solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitrile-based solvents such as R-CN (where R is a $C_2$-$C_{20}$ straight-chain, branched, or cyclic hydrocarbon group that may include unsaturation or ether linkages); amide-based solvents such as dimethylformamide; dioxolane-based solvents such as 1,3-dioxolane; or sulfolane-based solvents.

Among these, carbonate-based solvents are preferred, and a mixed solvent of a cyclic carbonate (e.g., ethylene carbonate or propylene carbonate) having high ionic conductivity and high dielectric constant and a linear carbonate (e.g., ethyl methyl carbonate, dimethyl carbonate, or diethyl carbonate) having low viscosity is more preferred. A volume ratio of cyclic carbonate to linear carbonate of about 1:1 to about 1:9 may provide excellent electrolyte performance.

The lithium salt may be any compound capable of providing lithium ions in the lithium secondary battery. Specific examples include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$.

The concentration of the lithium salt is preferably in the range of 0.1 M to 2.0 M. When the concentration is within this range, the electrolyte can achieve appropriate conductivity and viscosity, thereby exhibiting excellent electrolyte performance and enabling effective lithium-ion transport.

As described above, the lithium secondary battery including the positive electrode active material according to the present invention can stably exhibit excellent discharge capacity, output characteristics, and capacity retention, and is thus useful for portable devices such as mobile phones, notebook computers, and digital cameras, as well as for electric vehicles such as hybrid electric vehicles (HEVs).

[Best Mode for Carrying Out the Invention]

The following describes exemplary embodiments of the present invention in detail. However, these embodiments are merely illustrative, and the present invention is not limited thereto and is defined only by the scope of the claims described later.

**Example 1**

**(1) Preparation of Positive Electrode Active Material**

A precursor having the composition $Ni_{0.87}Co_{0.03}Mn_{0.10}(OH)_2$ was prepared, and $LiOH \cdot H_2O$ (Samjeon Chemical, battery grade) was uniformly mixed with the precursor as a lithium raw material. $Y_2O_3$, $ZrO_2$, and $Al(OH)_3$ were uniformly mixed as doping raw materials to prepare a mixture.

The molar ratio of lithium (Li) to total metals excluding lithium (Me), i.e., Li/Me, was designed to be 1.05. The doping raw materials were added such that, based on the precursor, the contents of Zr, Y, and Al were 2000 ppm, 1200 ppm, and 1000 ppm, respectively.

The mixture was introduced into a calcination furnace under an oxygen atmosphere and subjected to a preliminary calcination at 680 °C for 6.5 hours to obtain a preliminarily calcined product. The obtained preliminarily calcined product was then introduced into a calcination furnace under an oxygen atmosphere, heated to 880 °C, and calcined for 3 hours (1st step). Thereafter, calcination was performed at 940 °C for 1 hour (2nd step), followed by calcination at 780 °C for 11 hours (3rd step), thereby obtaining a calcined product through a 3-step calcination process.

The calcined product was pulverized to obtain a single-particle-type metal oxide doped with Al, Y, and Zr.

$Co(OH)_2$ and $Al(OH)_3$ were dry-mixed with the obtained single-particle-type metal oxide as coating raw materials, followed by heat treatment at 700 °C for 5 hours under an oxygen atmosphere to form a coating layer, thereby preparing the positive electrode active material. Here, the amounts of $Co(OH)_2$ and $Al(OH)_3$ were adjusted such that, relative to the single-particle metal oxide, Co corresponded to 2.5 mol%, and Al corresponded to 1000 ppm.

**Example 2**

A single-particle-type positive electrode active material was prepared in the same manner as in Example 1, except that the 1st-step calcination was carried out at 885 °C for 3 hours.

**Example 3**

A single-particle-type positive electrode active material was prepared in the same manner as in Example 1, except that the 1st-step calcination was carried out at 890 °C for 3 hours.

**Example 4**

A single-particle-type positive electrode active material was prepared in the same manner as in Example 1, except that the 1st-step calcination was carried out at 895 °C for 3 hours.

**Comparative Example 1**

A single-particle-type positive electrode active material was prepared in the same manner as in Example 1, except that the calcination process was performed as follows:
After preliminary calcination at 680 °C for 6.5 hours to obtain a preliminarily calcined product, the product was introduced into a calcination furnace under an oxygen atmosphere, heated, and calcined at 900 °C for 4 hours (1st step), followed by calcination at 780 °C for 11 hours (2nd step).

**Comparative Example 2**

A single-particle-type positive electrode active material was prepared in the same manner as in Comparative Example 1, except that the 1st-step calcination was carried out at 910 °C for 4 hours.

The sintering conditions of the Examples and Comparative Examples are summarized in Table 1 below.

[Table 1]

| Sample | Preliminary Calcination Temperature (°C) / Time (hr) | Main Calcination 1st-Step Temperature (°C) / Time (hr) | Main Calcination 2nd-Step Temperature (°C) / Time (hr) |
|---|---|---|---|
| Example 1 | 880/3 | 940/1 | 780/11 |
| Example 2 | 885/3 | 940/1 | 780/11 |
| Example 3 | 890/3 | 940/1 | 780/11 |
| Example 4 | 895/3 | 940/1 | 780/11 |
| Comparative Example 1 | 900/4 | - | 780/11 |
| Comparative Example 2 | 910/4 | - | 780/11 |

**Experimental Example 1 - Measurement of Dn and Dv Values**

For the positive electrode active materials prepared in Examples 1 to 4 and Comparative Examples 1 and 2, the Dv and Dn values were measured using a laser diffraction method. The results are shown in Tables 2 and 3 below.

In addition, FIG. 1 illustrates particle size graphs based on the number cumulative distribution for the positive electrode active materials prepared in Examples 1 to 4 and Comparative Examples 1 and 2.

[Table 2]

| | Dvmin | Dv05 | Dv10 | Dv50 | Dv90 | Dv95 | Dvmax |
|---|---|---|---|---|---|---|---|
| Example 1 | 1.261 | 1.947 | 2.255 | 3.63 | 5.71 | 6.48 | 11 |
| Example 2 | 1.261 | 2.111 | 2.424 | 3.79 | 5.79 | 6.53 | 11 |
| Example 3 | 1.261 | 2.103 | 2.403 | 3.68 | 5.61 | 6.34 | 11 |
| Example 4 | 1.261 | 2.111 | 2.408 | 3.69 | 5.63 | 6.36 | 11 |
| Comparative Example 1 | 1.060 | 2.007 | 2.352 | 3.73 | 5.86 | 6.75 | 13.08 |
| Comparative Example 2 | 1.261 | 2.085 | 2.424 | 3.82 | 6.01 | 6.94 | 13.08 |

[Table 3]

| | Dnmin | Dn05 | Dn10 | Dn50 | Dn90 | Dn95 | Dnmax |
|---|---|---|---|---|---|---|---|
| Example 1 | 1.192 | 1.297 | 1.412 | 2.348 | 3.83 | 4.37 | 9.19 |
| Example 2 | 1.217 | 1.377 | 1.557 | 2.602 | 4.12 | 4.66 | 9.4 |
| Example 3 | 1.218 | 1.383 | 1.567 | 2.591 | 4 | 4.51 | 9.16 |
| Example 4 | 1.221 | 1.394 | 1.582 | 2.599 | 4.01 | 4.52 | 9.19 |
| Comparative Example 1 | 0.841 | 0.911 | 0.996 | 2.1 | 3.61 | 4.11 | 9.15 |
| Comparative Example 2 | 0.841 | 0.911 | 0.996 | 2.096 | 3.61 | 4.11 | 9.17 |
| (Unit: $\mu$m) | | | | | | | |

Referring to FIG. 1, Table 2, and Table 3, it can be seen that the positive electrode active materials prepared in Examples 1 to 4 all exhibit a particle diameter ($Dn_{10}$) corresponding to the 10% point of the number cumulative distribution of 1.1 $\mu$m or greater, whereas Comparative Examples 1 and 2 show $Dn_{10}$ values of 1.0 $\mu$m or less, indicating a higher level of fines.

**Experimental Example 2** - Fabrication of Coin Cells and Evaluation of High-Temperature Capacity Retention

**(1) Fabrication of Coin Cells**

CR2032 coin-type half-cells were fabricated using the positive electrode active materials prepared in the Examples and Comparative Examples, as follows.

Specifically, the positive electrode active material, a conductive agent (acetylene black FX35, Denka Co.), and a polyvinylidene fluoride binder (product name: KF9709) were mixed in weight ratios of 96.5 : 1.5 : 2 or 95 : 2.2 : 2.8, and N-methyl-2-pyrrolidone (NMP) was added such that the resulting slurry contained approximately 65-69 wt% solids, thereby preparing a positive electrode active material slurry.

The slurry was coated onto an aluminum foil current collector (thickness: 20 $\mu$m) using a doctor blade, followed by drying and roll-pressing to fabricate the positive electrode. The electrode loading was approximately 15-16 mg/cm$^2$, and the roll-pressed density was approximately 3.5 g/cm$^3$.

A 2032 coin-type half-cell was then assembled in a conventional manner using the positive electrode, a lithium metal negative electrode (thickness: 400 $\mu$m, NEBA), an electrolyte, and a polypropylene/polyethylene separator.

The electrolyte was prepared by dissolving 1 M LiPF$_6$ in a mixed solvent of ethylene carbonate (EC), dimethyl carbonate (DMC), and diethyl carbonate (DEC) (volume ratio EC:DMC:DEC = 1:2:1), followed by the addition of 2 wt% vinylene carbonate (VC).

**(2) Measurement of Capacity Retention and DCIR Increase**

After aging the coin-type half-cells prepared in step (1) at room temperature (25 °C) for 10 hours, charge/-discharge testing was performed.

A formation cycle was conducted at 0.1C/0.1C within a voltage range of 2.5 to 4.25 V at 45 °C, followed by constant-current charge/discharge tests at 0.5C/1C. Capacity retention at the 50th cycle relative to the 1st cycle and the DCIR increase were calculated.

The DCIR was calculated as follows:

$$\text{DCIR} = (V_0 - V_{1/})I$$

(Where $V_0$ is the voltage before current application, $V_1$ is the voltage measured 10 seconds after current application, and I is the applied current.

Measurements were taken at the beginning of discharge in the charged state for both the 1st and 50th cycles.)

The results are summarized in Table 4 below.

[Table 4]

| Sample | Dv10-Dn10($\mu$m) | Dv10/Dn10 | Capacity Retention (%) | DCIR Increase (%) |
|---|---|---|---|---|
| Example 1 | 0.843 | 1.597 | 93.1 | 56.2 |
| Example 2 | 0.867 | 1.557 | 93.5 | 55.2 |
| Example 3 | 0.836 | 1.534 | 93.4 | 54.2 |
| Example 4 | 0.826 | 1.522 | 93.1 | 56.0 |
| Comparative Example 1 | 1.356 | 2.361 | 91.3 | 82.4 |
| Comparative Example 2 | 1.428 | 2.434 | 91.8 | 78.0 |

Referring to Table 4, it can be seen that the positive electrode active materials of Examples 1 to 4, in which both the $Dv_{10}/Dn_{10}$ values and the $Dv_{10}$ - $Dn_{10}$ values fall within the scope of the present invention, exhibit excellent high-temperature performance, including a capacity retention of 93% or higher and a DCIR increase of 56.2% or less.

In contrast, the positive electrode active materials of Comparative Examples 1 and 2, in which the $Dv_{10}/Dn_{10}$ values and $Dv_{10}$ - $Dn_{10}$ values fall outside the scope of the present invention, show degraded high-temperature capacity retention and increased DCIR relative to the Examples.

The present invention is not limited to the foregoing Examples, and may be embodied in various other forms. It will be understood by those skilled in the art that various modifications may be made without departing from the spirit or essential characteristics of the present invention. Therefore, the embodiments described above are merely illustrative in all respects and should not be construed as limiting.

**Claims**

1. A positive electrode active material for a lithium secondary battery, comprising:

   a single-particle metal oxide comprising 0.8 mol or more of nickel based on 1 mol of total metals excluding lithium; and
   a coating layer located on a surface of the metal oxide and comprising cobalt;
   wherein the metal oxide having the coating layer formed thereon has a particle diameter (Dn10), corresponding to 10% in a cumulative particle-number distribution, of 1.1 μm or greater.

2. The positive electrode active material of claim 1, wherein the particle diameter (Dn10) corresponding to 10% in the cumulative particle-number distribution of the metal oxide having the coating layer formed thereon is in a range from 1.1 μm to 2.0 μm.

3. The positive electrode active material of claim 1, wherein the metal oxide having the coating layer formed thereon satisfies the following Formula 1:

   [Formula 1]

   $$1.1 \leq Dv10 / Dn10 \leq 2.2$$

   wherein *Dv10* is an average particle diameter corresponding to 10% in a volume-based cumulative particle-size distribution of the metal oxide having the coating layer formed thereon, and *Dn10* is an average particle diameter at a point corresponding to 10% in a cumulative particle-number distribution obtained by accumulating particles from the smallest diameter.

4. The positive electrode active material of claim 1, wherein the metal oxide having the coating layer formed thereon satisfies the following Formula 2:

   [Formula 2]

   $$0.5\mu\mathrm{m} \leq Dv10 - Dn10 \leq 1.2\mu\mathrm{m}$$

   wherein *Dv10* is an average particle diameter corresponding to 10% in a volume-based cumulative particle-size distribution of the metal oxide having the coating layer formed thereon, and *Dn10* is an average particle diameter at a point corresponding to 10% in a cumulative particle-number distribution obtained by accumulating particles from the smallest diameter.

5. The positive electrode active material of claim 1, wherein a particle diameter (Dn$_{min}$) corresponding to a minimum value in the cumulative particle-number distribution of the metal oxide having the coating layer formed thereon is 1.0 μm or greater.

6. The positive electrode active material of claim 1, wherein the particle diameter (Dn$_{min}$) corresponding to a minimum value in the cumulative particle-number distribution of the metal oxide having the coating layer formed thereon is in a range from 1.0 μm to 1.4 μm.

7. The positive electrode active material of claim 1, wherein an average particle diameter (Dv50) of the metal oxide having the coating layer formed thereon is 5 μm or less.

8. The positive electrode active material of claim 1, wherein the coating layer further comprises aluminum.

9. The positive electrode active material of claim 1, wherein a content of cobalt included in the coating layer is in a range from 0.035 mol to 0.08 mol based on 1 mol of total metals excluding lithium in the single-particle metal oxide.

10. The positive electrode active material of claim 1, wherein the metal oxide further comprises cobalt and manganese, and a content of cobalt is 0.05 mol or less based on 1 mol of total metals excluding lithium.

11. The positive electrode active material of claim 10, wherein the metal oxide further comprises a doping element, and the doping element comprises at least one selected from the group consisting of Y, Al, Zr, Nb, Mo, W, Ti, Ce, Mg, B, P, V, and Sr.

12. A positive electrode for a lithium secondary battery comprising the positive electrode active material according to any one of claims 1 to 11.

13. A lithium secondary battery comprising the positive electrode according to claim 12.

【Fig. 1】

## INTERNATIONAL SEARCH REPORT

| International application No. |
| --- |
| **PCT/KR2024/013840** |

| A. | CLASSIFICATION OF SUBJECT MATTER |
| --- | --- |

**H01M 4/36**(2006.01)i; **H01M 4/525**(2010.01)i; **H01M 4/505**(2010.01)i; **H01M 4/131**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); C01G 53/00(2006.01); H01M 10/052(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차 전지(lithium secondary battery), 양극 활물질(cathode active material), 단입자(single particle), 니켈(nickel, Ni), 코발트(cobalt, Co), 코팅층(coating layer), 입경(particle size), 알루미늄(aluminum, Al), 도핑(doping)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2022-515872 A (CONTEMPORARY AMPEREX TECHNOLOGY CO., LTD.) 22 February 2022 (2022-02-22)<br>See claims 1, 2 and 7; paragraphs [0032], [0039], [0042], [0048], [0059], [0088], [0103], [0111] and [0125]; and table 1, example 4. | 1-13 |
| A | KR 10-2023-0095271 A (POSCO HOLDINGS INC. et al.) 29 June 2023 (2023-06-29)<br>See abstract; and claims 1-21. | 1-13 |
| A | JP 2022-009262 A (NICHIA CHEM IND. LTD.) 14 January 2022 (2022-01-14)<br>See abstract; and claims 1-7. | 1-13 |
| A | KR 10-2022-0127242 A (SUMITOMO CHEMICAL CO., LTD.) 19 September 2022 (2022-09-19)<br>See abstract; and claims 1-20. | 1-13 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 January 2025** | **02 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/013840** |

### C.    DOCUMENTS CONSIDERED TO BE RELEVANT

| Category* | Citation of document, with indication, where appropriate, of the relevant passages | Relevant to claim No. |
| --- | --- | --- |
| A | KR 10-2023-0081051 A (COSMO AM&T CO., LTD.) 07 June 2023 (2023-06-07)<br>See abstract; and claims 1-26. | 1-13 |

Form PCT/ISA/210 (second sheet) (July 2022)

**INTERNATIONAL SEARCH REPORT**
Information on patent family members

International application No.

**PCT/KR2024/013840**

| Patent document cited in search report | | | Publication date (day/month/year) | Patent family member(s) | | | Publication date (day/month/year) |
|---|---|---|---|---|---|---|---|
| JP | 2022-515872 | A | 22 February 2022 | CN | 110233259 | A | 13 September 2019 |
| | | | | CN | 110233259 | B | 09 February 2021 |
| | | | | CN | 112909238 | A | 04 June 2021 |
| | | | | CN | 112909238 | B | 22 April 2022 |
| | | | | EP | 3799165 | A1 | 31 March 2021 |
| | | | | EP | 3799165 | A4 | 20 October 2021 |
| | | | | JP | 7165271 | B2 | 02 November 2022 |
| | | | | US | 11699789 | B2 | 11 July 2023 |
| | | | | US | 2022-0077464 | A1 | 10 March 2022 |
| | | | | US | 2023-0307635 | A1 | 28 September 2023 |
| | | | | WO | 2020-135767 | A1 | 02 July 2020 |
| KR | 10-2023-0095271 | A | 29 June 2023 | CN | 118435379 | A | 02 August 2024 |
| | | | | EP | 4456188 | A1 | 30 October 2024 |
| | | | | WO | 2023-121147 | A1 | 29 June 2023 |
| JP | 2022-009262 | A | 14 January 2022 | JP | 2017-188443 | A | 12 October 2017 |
| | | | | JP | 2018-147889 | A | 20 September 2018 |
| | | | | JP | 2023-115074 | A | 18 August 2023 |
| | | | | JP | 6341312 | B2 | 13 June 2018 |
| | | | | JP | 6966703 | B2 | 17 November 2021 |
| | | | | JP | 7299520 | B2 | 28 June 2023 |
| | | | | US | 10115967 | B2 | 30 October 2018 |
| | | | | US | 10326132 | B2 | 18 June 2019 |
| | | | | US | 10700353 | B2 | 30 June 2020 |
| | | | | US | 11233238 | B2 | 25 January 2022 |
| | | | | US | 11728481 | B2 | 15 August 2023 |
| | | | | US | 12100836 | B2 | 24 September 2024 |
| | | | | US | 2017-0288221 | A1 | 05 October 2017 |
| | | | | US | 2019-0027749 | A1 | 24 January 2019 |
| | | | | US | 2019-0260023 | A1 | 22 August 2019 |
| | | | | US | 2020-0287212 | A1 | 10 September 2020 |
| | | | | US | 2022-0102716 | A1 | 31 March 2022 |
| | | | | US | 2023-0352673 | A1 | 02 November 2023 |
| KR | 10-2022-0127242 | A | 19 September 2022 | CN | 114982015 | A | 30 August 2022 |
| | | | | EP | 4092784 | A1 | 23 November 2022 |
| | | | | JP | 2021-114406 | A | 05 August 2021 |
| | | | | JP | 6734491 | B1 | 05 August 2020 |
| | | | | US | 2023-0118425 | A1 | 20 April 2023 |
| | | | | WO | 2021-145438 | A1 | 22 July 2021 |
| KR | 10-2023-0081051 | A | 07 June 2023 | KR | 10-2024-0152808 | A | 22 October 2024 |
| | | | | KR | 10-2024-0152809 | A | 22 October 2024 |
| | | | | KR | 10-2024-0153299 | A | 22 October 2024 |
| | | | | KR | 10-2734161 | B1 | 25 November 2024 |

Form PCT/ISA/210 (patent family annex) (July 2022)